# EUROPÄISCHE PATENTANMELDUNG

(11) **EP 3 396 182 A1**
(43) Veröffentlichungstag der Anmeldung: **31.10.2018**
(21) Anmeldenummer: 17167808.9
(22) Anmeldetag: 24.04.2017
(51) Int. Cl.: F16C 3/035, E01D 11/00, F16C 29/02

(54) **AXIALES WIDERSTANDSGLEITLAGER**

(71) Anmelder: Bochumer Eisenhütte Heintzmann GmbH&Co. Kg, 44787 Bochum (DE)
(72) Erfinder: WUNDERLICH, Franz-Josef, 47495 Rheinberg (DE); WATTEROTT, Peter, 44651 Herne (DE); GIESE, Andreas, 45770 Marl (DE)
(74) Vertreter: Isfort, Olaf

(57) **Zusammenfassung**

Die Erfindung betrifft ein axiales Widerstandsgleitlager (1) mit einer Gleiteinheit (2), einem Gegenlager (3), wobei die Gleiteinheit (2) das Gegenlager (3) an mindestens einer Kontaktstelle (4) berührt, einer Lagerachse (5), wobei die Lagerachse (5) die Richtung eines Gleitweges (a) vorgibt, wobei die Gleiteinheit (2) bei Überwindung eines Verschiebewiderstands zwischen der Gleiteinheit (2) und dem Gegenlager (3) entlang des Gleitwegs (a) am Gegenlager (3) entlang gleitet, wobei der Verschiebewiderstand definiert vorgebbar ist sowie ein Verfahren zur Herstellung eines axialen Widerstandsgleitlagers (1).

## Beschreibung

Die Erfindung betrifft ein axiales Widerstandsgleitlager mit einer Gleiteinheit, einem Gegenlager, wobei die Gleiteinheit das Gegenlager an mindestens einer Kontaktstelle berührt, einer Lagerachse, wobei die Lagerachse die Richtung eines Gleitweges vorgibt, wobei die Gleiteinheit bei Überwindung eines Verschiebewiderstands zwischen der Gleiteinheit und dem Gegenlager entlang des Gleitwegs am Gegenlager entlang gleitet.

Derartige Widerstandsgleitlager sind bekannt und eignen sich zur Lagerung zweier Bauteile zueinander. Ein Widerstandsgleitlager zwischen solchen Bauteilen kann eine Entlastungsbewegung entlang des Gleitweges ermöglichen, sodass Überlastsituationen zwischen den gelagerten Bauteilen abgefangen werden können, die ansonsten eine Zerstörung mindestens eines Bauteils zur Folge hätten. Bei diesen Bauteilen kann es sich beispielsweise um einen Brückenpfeiler und ein Tragseil handeln, wobei das Widerstandsgleitlager in diesem Fall ein Reißen des Tragseils durch die Entlastungsbewegung verhindert. Die in dem an das Widerstandgleitlager angeschlossenen Bauteil gespeicherte potentielle Energie wird bei Ansprechen des Widerstandsgleitlagers abgebaut und dort im Wesentlichen in kinetische Energie, also Bewegung und Umformung, umgewandelt.

Nachteilig an den bekannten Widerstandsgleitlagern ist, dass der Widerstand der Gleitlager nicht reproduzierbar eingestellt werden kann. Aus diesem Grund ist nicht präzise vorhersagbar, ab welcher auf das Lager wirkenden Kraft die Gleiteinheit an dem Gegenlager entlang gleitet und die Entlastungsbewegung ausführt. Der Einsatz solcher Widerstandsgleitlager erfordert jedoch immer häufiger einen genau definierten Verschiebewiderstand, ab dem das Lager anspricht, um Überlastsituationen gezielt zu begegnen.

Vor diesem Hintergrund ist es Aufgabe der Erfindung, ein verbessertes Widerstandsgleitlager bereitzustellen. Insbesondere soll die Größe der auf das Gleitlager wirkenden Kraft möglichst genau angegeben werden können, bei der die Gleiteinheit beginnt, entlang des Gleitweges am Gegenlager entlang zugleiten.

Diese Aufgabe löst die Erfindung ausgehend von einem Widerstandsgleitlager der eingangs genannten Art dadurch, dass der Verschiebwiederstand definiert vorgebbar ist.

Durch die definierte Vorgabe des erforderlichen Verschiebewiderstands lässt sich ein Widerstandsgleitlager angeben, dass vorhersagbar und reproduzierbar eine Lagerung bereitstellt, die bei Überwindung des Verschiebewiderstands an allen Kontaktstellen zwischen Gleiteinheit und Gegenlager eine definierte Entlastung ermöglicht. Vorteilhafte Ausgestaltungen und Weiterbildungen der Erfindung ergeben sich aus den abhängigen Ansprüchen.

Gemäß einer vorteilhaften Ausgestaltung der Erfindung ist vorgesehen, dass der Verschiebewiderstand im Wesentlichen durch den Haftreibungswiderstand und den Gleitreibungswiderstand zwischen der Gleiteinheit und dem Gegenlager gegeben ist. Dabei sollte der Haftreibungswiderstand im Wesentlichen dem Gleitreibungswiderstand zwischen der Gleiteinheit und dem Gegenlager nahekommen, sodass ein möglichst gleichbleibender Verschiebewiderstand gegeben ist. Bevorzugt sollte die Kraft, ab der der Haftreibungswiderstand überwunden wird, um nicht mehr als 20%, weiter bevorzugt um nicht mehr als 10%, besonders bevorzugt um nicht mehr 5% größer sein als die zur Überwindung des Gleitreibungswiderstands erforderliche Kraft. Auf diese Weise lässt sich ein höheres Anfangsmoment durch die höhere Haftreibung verhindern, sodass der sogenannte Stick-Slip-Effekt reduziert wird. Nach Überwindung der Haftreibung liegt im Bereich der Gleitreibung eine definierte Kraft vor, wobei dieser Bereich durch Reduzierung des Anfangsmomentes schneller erreicht und dauerhaft gehalten wird. Hierdurch ist der Verschiebewiderstand über den gesamten Gleitweg definiert vorgegeben. Abhängig von der Einsatzsituation, insbesondere der Umgebung und der Einbauweise, aber auch den Kundenwünschen kann durch die geeignete Wahl von Materialkombinationen für die Gleiteinheit und das für Gegenlager der Haftreibungswiderstand reduziert und ein definierter sowie gleichbleibender Verschiebewiederstand vorgegeben werden.

Eine bevorzugte Ausführung sieht vor, dass der Verschiebewiderstand durch die Umformung des Gegenlagers durch die Gleiteinheit beim Entlangleiten der Gleiteinheit auf dem Gleitweg an dem Gegenlager gegeben ist. Durch eine definierte Umformung lässt sich der Verschiebewiderstand definiert vorgegeben. Eine solche definierte Umformung kann dadurch erreicht werden, dass die Gleiteinheit das Gegenlager nicht schneidend verformt sondern (kalt) umformt.

In einer weiter bevorzugten Variante ist vorgesehen, dass die Gleiteinheit dazu ausgebildet ist, beim Entlanggleiten auf dem Gleitweg das Material des Gegenlagers zu verdrängen. Durch die Verdrängung des Gegenlagermaterials durch die Gleiteinheit wird eine definierte Umformung erreicht, durch die sich der Verschiebewiderstand des Widerstandsgleitlagers definiert vorgegeben lässt. Der Verschiebewiderstand kann bei dieser Ausgestaltung auch dadurch vorgegeben werden, dass ein definiertes Volumen vorgesehen wird, in das das verdrängte Material ausweichen kann.

Besonders vorteilhaft ist die Weiterbildung, dass die Gleiteinheit aus Nitrierstahl, vorzugsweise aus korrosionsbeständigem und nitrierbarem und hochtemperaturbeständigem Stahl, weiter vorzugsweise aus austenitischem und / oder martensitischem Stahl, besteht. Diese Materialien eignen sich besonders, um an dem Gegenlager auf dem Gleitweg entlang zu gleiten, und zwar mit definiertem Widerstand, z.B. durch entsprechende Oberflächenvergütung. Gleichzeitig kann die Gleiteinheit dabei gezielt (z.B. durch Härtung) so ausgelegt werden, dass diese nicht verformt wird, sondern im Wesentlichen nur das Gegenlager.

Weiter vorteilhaft ist die Ausgestaltung, dass das Gegenlager aus Baustahl, Werkzeugstahl, Automatenstahl, Sintereinsen, Kupfer-Gusseisen, Sintermetall, Korrosionsschutzmaterialien, einer Kupferlegierung, einer Kupferknetlegierung, einer Blei-Zinn-Gusslegierung, einem thermoplastischen Kunststoff oder einem Duroplast besteht. Diese Materialien haben ein ausgewogenes Verhältnis aus Festigkeit und Duktilität, und können je nach gewünschter Größe des Verschiebewiderstand ausgewählt werden, um das Gegenlager zu bilden. Diese Materialien gewährleisten aufgrund ihrer Plastizität und Zähigkeit eine definierte Umformung. Materialien wie Sintermetalle (z.B. Bronze oder Blei enthaltend) oder auch Blei-Zinn-Gusslegierungen haben den Vorteil, dass diese Bestandteile aufweisen, die als Schmiermittel zwischen Gleiteinheit und Gegenlager wirken. Dies trägt positiv zur Einstellung eines definierten Verschiebewiderstands bei. Korrosionsfreie Materialien gewährleisten, dass sich der Verschiebewiderstand auch über längere Zeiträume nicht ändert.

Durch Auswahl einer geeigneten Materialpaarung für Gleitelement und Gegenlager und durch Vorgabe der Verformungsgeometrie kann der gewünschten Verschiebewiderstand für die jeweilige Anwendung gezielt eingestellt werden. Auch das Verhältnis von Haftreibungswiderstand und Gleitreibungswiderstand kann durch die Materialwahl geeignet gewählt werden.

In einer weiter bevorzugten Variante ist vorgesehen, dass die Gleiteinheit als Kolben ausgebildet ist und das Gegenlager als eine die Gleiteinheit umgebende Hülse ausgebildet ist. Diese Anordnung von Gleiteinheit und Gegenlager bietet die Möglichkeit, dass sich das Gegenlager nach außen verformen lässt. Hierdurch könnte die äußere Geometrie des Widerstandsgleitlagers durch das Gleiten des Kolbens in der Hülse teilweise verändert werden. Die Ausbildung der Gleiteinheit als Kolben und die Umschließung des Kolbens durch eine Hülse bietet eine stabile Anordnung der Gleiteinheit im Gegenlager. Hierdurch ist der Verschiebewiderstand über den gesamten Gleitweges definiert vorgebbar.

Eine alternative Ausführungsform der Erfindung sieht vor, dass das Gegenlager als Kolben ausgebildet ist und die Gleiteinheit als das Gegenlager umgebende Hülse ausgebildet ist. Dieser Anordnung von Gleiteinheit und Gegenlager bietet die Möglichkeit, dass die Umformung sich auf das innenliegende Gegenlager beschränkt und die äußere Geometrie des Widerstandsgleitlagers erhalten bleibt.

Weiter vorteilhaft ist die Ausgestaltung, dass die Gleiteinheit eine Profilierung aufweist, die dazu ausgebildet ist, in das Material des Gegenlagers einzudringen. Die Profilierung hilft einen definierten Verschiebewiderstand zwischen der Gleiteinheit und dem Gegenlager vorzugeben, indem die Umformung des Gegenlagers durch die Profilierung der Gleiteinheit vorgegeben wird. Die gewählte Form der Profilierung hängt von dem Verschiebewiderstand ab, der durch das Widerstandsgleitlager erreicht werden soll. Neben Zähnen können die Profilierungen auch als Keile, Wellen, Dreiecke, Ellypsen oder als Wabenform ausgebildet sein.

Eine bevorzugte Ausführung sieht vor, dass die Profilierung als Zähne ausgebildet ist, die von der Körperkontur der Gleiteinheit abstehen und zwischen den Zähnen jeweils Zahntäler ausbilden. Die Ausbildung von Zähnen und Zahntälern ermöglicht eine definierte Umformung des Gegenlagers in die Zahntäler hinein. Durch die Zähne wird die Gleiteinheit in dem Gegenlager zentriert und entlang des Gleitweges geführt. Bei Gegenlagern in Form von Seilen werden die Zähne der Gleiteinheit auf den Schlag der Gegenlager angepasst. Die Profilierung erhält hier vorzugsweise mit einen Profildrall in Drehmomentenrichtung eines sich längenden Litzenseils.

Eine vorteilhafte Ausführungsform der Erfindung sieht vor, dass der Kolben in Richtung der Lagerachse einen konischen Verlauf aufweist, wobei der Kolben in Gleitrichtung einen kleineren Außendurchmesser aufweist als der Innendurchmesser der Hülse und der Kolben entgegen der Gleitrichtung einen größeren Außendurchmesser aufweist als der Innendurchmesser der Hülse. Durch den konischen Verlauf des Kolbens lässt sich die kontrollierte Umformung des Gegenlagers durch die Gleiteinheit einstellen, sodass der Verschiebewiderstand definiert vorgebbar ist.

Eine vorteilhafte Ausführung ist, dass die Position der Gleiteinheit relativ zum Gegenlager sensorisch erfasst wird. Über eine sensorische Erfassung der Position der Gleiteinheit gegenüber dem Gegenlager kann festgestellt werden, ob das axiale Widerstandsgleitlager über den Verschiebewiderstand hinaus belastet wurde. Außerdem kann über die Position der Gleiteinheit ermittelt werden, wie weit die Gleiteinheit entlang des Gleitweges am Gegenlager bereits entlang geglitten ist. Hierdurch lässt sich ermitteln, inwiefern das Widerstandsgleitlager bei der Lagerung zweier mit dem Lager verbundener Bauteile bereits eine Entlastungsbewegung dieser zueinander ermöglicht hat und ob das Lager noch weitere Entlastungsbewegungen ermöglicht oder, falls nicht, ausgetauscht werden muss. Um die Position der Gleiteinheit erfassen zu können, kann entsprechend ein Positionsgeber vorgesehen sein, der die Position der Gleiteinheit erfasst und ein entsprechend weiter auswertbares Sensorsignal erzeugt. Als Positionsgeber eignet sich z.B. ein herkömmlicher Dehnungsmessstreifen.

Ferner ist Gegenstand der Erfindung ein Verfahren zur Herstellung eines axialen Widerstandsgleitlagers umfassend folgende Schritte; Bereitstellung einer Gleiteinheit, Bereitstellung eines Gegenlagers und Zusammenfügen von Gleiteinheit und Gegenlager durch Ineinanderpressen der Teile auf einer Presse, wobei beim Zusammenfügen der Gleiteinheit und des Gegenlagers ein Kraft-Weg-Diagramm aufgezeichnet wird. Die Aufzeichnung eines Kraft-Weg Diagramms beim Zusammenfügen der Gleiteinheit mit dem Gegenlager ermöglicht Rückschlüsse hinsichtlich des Verschiebewiderstands zwischen der Gleiteinheit und dem Gegenlager. Hierdurch lässt sich ein axiales Widerstandsgleitlager herstellen, bei dem der Verschiebewiderstand genau angegeben und dokumentiert werden kann. Auf diese Weise lassen sich durch geeignete Form und Materialwahl für den jeweiligen Einsatzzweck geeignete Widerstandlager herstellen. Die Aufzeichnung des Kraft-Weg-Diagramms dient dem Nachweis, dass das Widerstandsgleitlager den für den Einsatzzweck erforderlichen Verschiebewiderstand aufweist.

Weitere Merkmale, Einzelheiten und Vorteile der Erfindung ergeben sich aufgrund der nachfolgenden Beschreibung sowie anhand der Zeichnungen. Ausführungsbeispiele der Erfindung sind in den folgenden Zeichnungen rein schematisch dargestellt und werden nachfolgend näher beschrieben. Einander entsprechende Gegenstände oder Elemente sind in allen Figuren mit den gleichen Bezugszeichen versehen. Es zeigen:
- Figur 1:: erfindungsgemäßes Widerstandsgleitlager,
- Figur 2:: erfindungsgemäßes Widerstandsgleitlager in einer weiteren Ausführungsform,
- Figur 3:: erfindungsgemäßes Widerstandsgleitlager in einer weiteren Ausführungsform,
- Figur 4:: erfindungsgemäßes Widerstandsgleitlager in einer weiteren Ausführungsform.

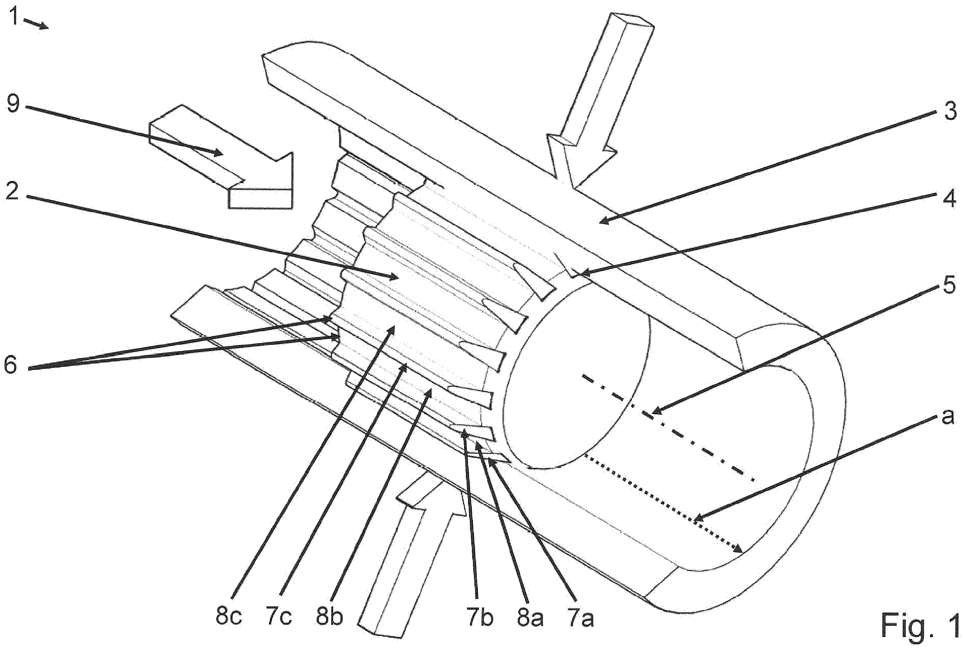

In den Figuren mit dem Bezugszeichen 1 bezeichnet ist ein erfindungsgemäßes Widerstandsgleitlager 1 dargestellt. Die Darstellung gemäß Figur 1 zeigt eine als Kolben ausgebildete Gleiteinheit 2 die von einem als Hülse ausgebildeten Gegenlager 3 umgeben ist. Das Widerstandgleitlager 1 dient zur Lagerung zweier Bauteile (nicht dargestellt) aneinander. Das eine Bauteil wird hierzu mit der Gleiteinheit 2 verbunden, das andere Bauteil mit dem Gegenlager 3. Zum Zwecke der Erläuterung ist die Hülse des Gegenlagers 3 aufgeschnitten dargestellt. Die Gleiteinheit 2 berührt das Gegenlager 3 an mindestens einer Kontaktstelle 4. Durch das Gegenlager 3 und die Gleiteinheit 2 ist eine Lagerachse 5 des Widerstandsgleitlagers 1 gebildet, welche die Richtung des Gleitweges a vorgibt. Bei Überwindung eines Verschiebewiderstands zwischen der Gleiteinheit 2 und dem Gegenlager 3 gleitet die Gleiteinheit 2 entlang des Gleitweges a in Gleitrichtung 9 (durch Blockpfeil angedeutet) am Gegenlager 3 entlang. Das hier gezeigte Widerstandsgleitlager 1 zeichnet sich dadurch aus, dass der Verschiebewiderstand zwischen der Gleiteinheit 2 und dem Gegenlager 3 definiert vorgebbar ist. Die definierte Vorgabe des Verschiebewiderstands ermöglicht eine vorhersagbare und reproduzierbare Lagerung durch das Widerstandsgleitlager 1. Auf diese Weise lassen sich mit dem erfindungsgemäßen Widerstandsgleitlager 1 definierte Entlastungsbewegungen erreichen. Überlastsituationen zwischen den gelagerten Bauteilen können durch das Widerstandsgleitlager 1 abgefangen werden, sodass eine Zerstörung der Bauteile, oder zu mindestens eines Bauteils, durch das Widerstandsgleitlager 1 wirksam verhindert werden kann. Bei den über das Widerstandsgleitlager 1 aneinander gelagerten Bauteilen kann es sich beispielsweise um einen Brückenpfeiler handeln, der mit dem Gegenlager 3 verbunden ist und ein Tragseil, dass mit der Gleiteinheit 2 verbunden ist. In einer Überlastsituation durch erhöhte Zugkräfte an dem Tragseil wird der definierte Verschiebewiderstand im Widerstandsgleitlager 1 überwunden, sodass die Gleiteinheit 2 entlang des Gleitweges a am Gegenlager 3 entlang gleitet. Hierdurch wird das Tragseil entlastet und ein Reißen des Tragseils verhindert. Um beispielsweise die dargestellte Überlastsituation gezielt abfangen zu können, ist ein genau definierter Verschiebewiderstand zwischen der Gleiteinheit 2 und dem Gegenlager 3 erforderlich. Der Verschiebewiderstand ist hierbei im Wesentlichen durch den Haftreibungswiderstand und den Gleitreibungswiderstand zwischen der Gleiteinheit 2 und dem Gegenlager 3 gegeben. Bei einem Haftreibungswiderstand, der im Wesentlichen dem Gleitreibungswiderstand zwischen der Gleiteinheit 2 und dem Gegenlager 3 entspricht, kann ein möglichst gleichbleibender Verschiebewiderstand über den gesamten Gleitweg a des axialen Widerstandsgleitlagers 1 erreicht werden. Hierdurch lässt sich insbesondere der sogenannte Stick-Slip-Effekt verhindern oder zumindest reduzieren, der einen Wechsel zwischen der regelmäßig höheren Haftreibung und regelmäßig niedrigeren Gleitreibung bedeutet und die Genauigkeit und Gleichmäßigkeit des Verschiebewiderstands und damit der Entlastungsbewegung entlang des Gleitweges a negativ beeinflusst. Durch eine gezielte Umformung des Gegenlagers 3 durch die Gleiteinheit 2 beim Entlanggleiten der Gleiteinheit 2 auf dem Gleitweg a an dem Gegenlager 3 kann zudem ein definierter Verschiebewiderstand zwischen Gleiteinheit 2 und Gegenlager 3 vorgegeben werden. Die in Figur 1 gezeigte Gleiteinheit 2 weist hierzu eine Profilierung 6 auf, die durch Zähne 7a, 7b, 7c (zur besseren Übersicht sind nur einzelne gezeigte Zähne mit Bezugszeichen versehen) und Zahntäler 8a, 8b, 8c (zur besseren Übersicht sind nur einzelne gezeigte Zahntäler mit Bezugszeichen versehen) gebildet ist. Die Zähne 7a, 7b, 7c der Profilierung 6 stehen von der Körperkontur der Gleiteinheit 2 ab und bilden zwischen den Zähnen jeweils Zahntäler 8a, 8b, 8c aus. Bei der Entlastungsbewegung im Widerstandsgleitlager 1, also der Bewegung der Gleiteinheit 2 in Gleitrichtung 9 im Gegenlager 3 wird eine definierte Umformung des Gegenlagers 3 durch die Gleiteinheit 2 erreicht. Die Zähne 7a, 7b, 7c der Gleiteinheit 2 schneiden nicht in das Gegenlager 3, sondern verdrängen das Material des Gegenlagers 3 lediglich, wie in Figur 1 an der Riffelung, in Gleitrichtung 9 hinter der Gleiteinheit 2, zu sehen. Es kommt bei der Bewegung der Gleiteinheit 2 im Gegenlager 3 zu keiner Spanbildung an den Zähnen 7a, 7b, 7c, da dies die definierte Vorgabe des Verschiebewiderstands erschweren würde. Hierzu sind die Zähne 7a, 7b, 7c im vorderen Bereich abgeflacht. Das durch die Zähne 7a, 7b, 7c verdrängte Material wird in die Zahntäler 8a, 8b, 8c der Gleiteinheit 2 verdrängt, sodass eine definierte Umformung gegeben ist, die einen genau vorgebbaren Verschiebewiderstand bestimmt. Die Zähne 7a, 7b, 7c dienen zudem der Zentrierung der Gleiteinheit 2 im Gegenlager 3 und der Führung der Gleiteinheit 2 entlang des Gleitweges a im Gegenlager 3. Im hier gezeigten Ausführungsbeispiel verlaufen die Zähne 7a, 7b, 7c und Zahntäler 8a, 8b, 8c in Richtung der Lagerachse 5. Es ist aber auch denkbar, dass die Zähne 7a, 7b, 7c einen Drall um die Lagerachse 5 aufweisen und so ein Gewinde ausbilden. Dies kann bei der Lagerung von gedrehten Drahtseilen durch das Widerstandsgleitlager 1 von Vorteil sein, da das Gewinde die durch das belastete Drahtseil induzierte Drehbewegung um die Lagerachse 5 neutralisieren kann, um den Verschiebewiderstand nicht durch zusätzliche Reibung undefiniert zu verstärken. Zur Herstellung des gezeigten Widerstandsgleitlagers 1 wird die Gleiteinheit 2 in Gleitrichtung 9 in das Gegenlager 3 eingepresst. Hierbei wird ein Kraft-Weg-Diagramm aufgezeichnet, welches Aufschlüsse über den Verschiebewiderstand auf dem verbleibenden Gleitweg a gibt.

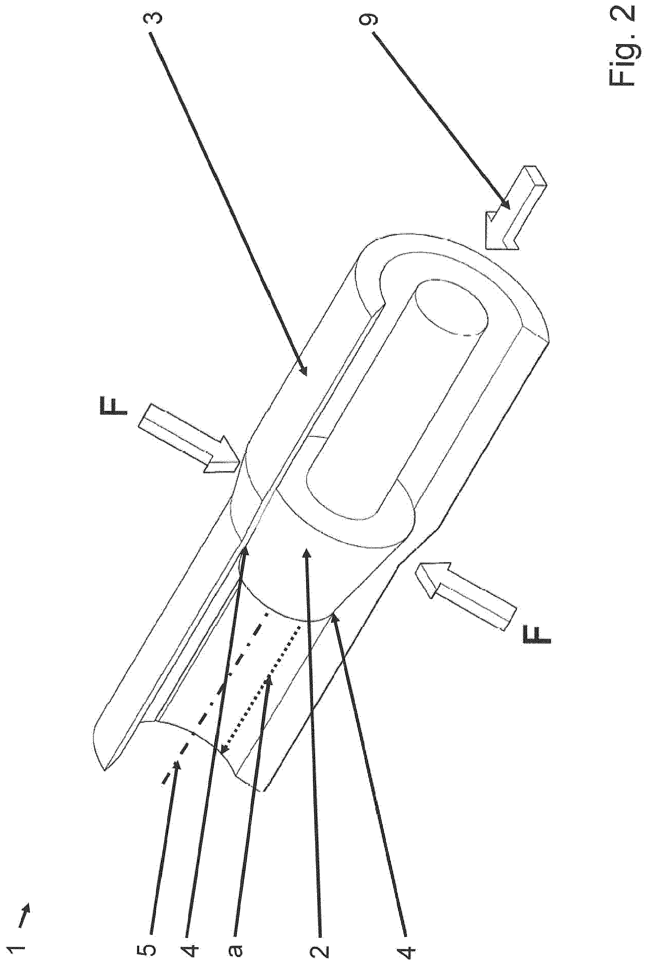

Die Figur 2 zeigt ein Widerstandsgleitlager 1 mit einer Gleiteinheit 2 und einem als Hülse ausgebildeten Gegenlager 3, welches die Gleiteinheit 2 umschließt. Durch das Gegenlager 3 ist eine Lagerachse 5 des Widerstandsgleitlagers gebildet, wobei die Lageachse 5 die Richtung des Gleitweges a vorgibt. An diesem Gleitweg a gleitet die Gleiteinheit 2 bei Überwindung des Verschiebewiderstandes an dem Gegenlager 3 entlang. Zwei nicht gezeigte Bauteile, die einerseits mit der Gleiteinheit 2 und andererseits mit dem Gegenlager 3 verbindbar sind, können durch das Widerstandsgleitlager 1 definiert zueinander gelagert werden. So lassen sich Überlastsituationen zwischen den gelagerten Bauteilen durch das Widerstandsgleitlager 1 einfach abfangen, um eine Zerstörung der Bauteile, wirksam zu verhindern. Bei den mit dem Widerstandsgleitlager 1 gelagerten Bauteilen kann es sich beispielsweise um zwei Betonschalen zur Verschalung von Hohlräumen im Berg- und Tunnelbau handeln, die jeweils benachbarten Schalen sind hierzu einerseits mit dem Gegenlager 3 und andererseits mit der Gleiteinheit 2 verbunden. In einer Überlastsituation durch Setzbewegungen in dem den Hohlraum umgebenden Gebirge wird der definierte Verschiebewiderstand im Widerstandsgleitlager 1 überwunden, sodass die Gleiteinheit 2 entlang des Gleitweges a am Gegenlager 3 entlang gleitet. Hierdurch werden die Schalen entlastet und ein Brechen der Schalen verhindert. Im hier gezeigten Ausführungsbeispiel ist die Gleiteinheit 2 als Kolben ausgebildet, der in Richtung der Lagerachse 5 einen konischen Verlauf aufweist. In Gleitrichtung 9 hat der Kolben 2 hierdurch einen kleineren Außendurchmesser als der Innendurchmesser des als Hülse ausgebildeten Gegenlagers 3. Entgegen der Gleitrichtung 9 weist der Kolben aufgrund des konischen Verlaufes einen größeren Außendurchmesser als der Innendurchmesser des Gegenlagers 3 auf. Hierdurch kann eine gezielte Verformung des Gegenlagers 3 durch die Gleiteinheit 2 erreicht werden. Wie in Figur 2 zu sehen ist drückt der Kolben 2 beim Entlanggleiten auf dem Gleitweg a in Richtung Gleitrichtung 9 die Hülse des Gegenlagers 3 nach außen auf und sorgt hierdurch für einen definiert vorgebbaren Verschiebewiderstand zwischen dem Gegenlager 3 und der Gleiteinheit 2. Die durch die engere Hülse 3 auf den Kolben 2 ausgeübte Kraft F dient ebenfalls der genauen Vorgabe des Verschiebewiderstand des entlang des Gleitweges a. Zur Herstellung des gezeigten Widerstandsgleitlagers 1 wird die Gleiteinheit 2 in Gleitrichtung 9 in das Gegenlager 3 eingepresst. Hierbei wird ein Kraft-Weg-Diagramm aufgezeichnet, welches Aufschlüsse über den Verschiebewiderstand auf dem verbleibenden Gleitweg a gibt.

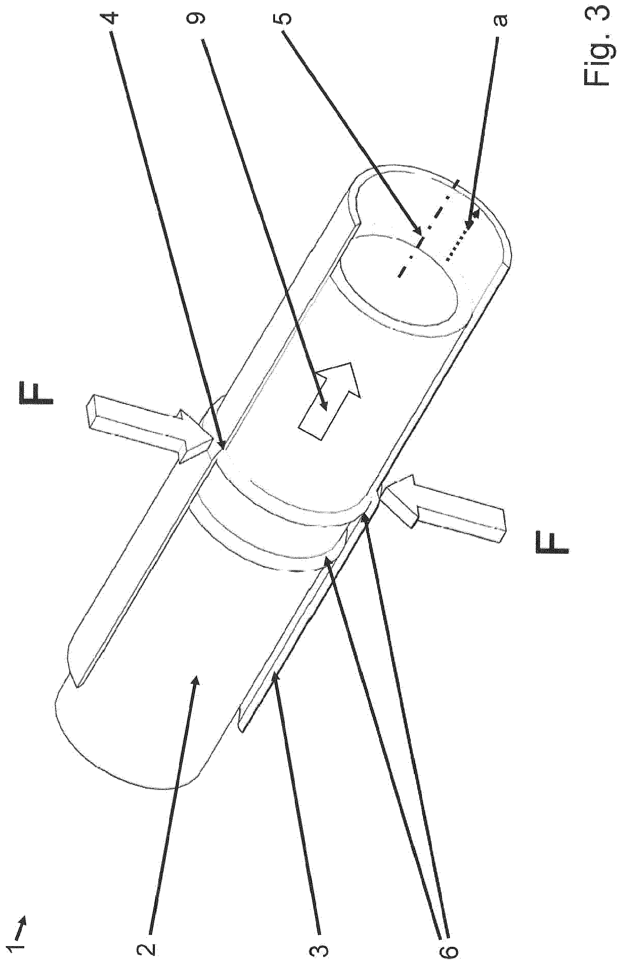

Aus Figur 3 geht ein weiteres Widerstandsgleitlager 1 hervor. Das hier gezeigte Widerstandsgleitlager 1 ist durch zwei ineinander geschobene Rohre 2, 3 gebildet. Das innere Rohr 2 bildet die Gleiteinheit 2, während das äußere Rohr 3 das Gegenlager 3 bildet. An der mindestens einen Kontaktstelle 4 weist die Gleiteinheit 2 eine erste umlaufende Profilierung 6 auf, die dazu ausgebildet ist, das Material des Gegenlagers 3 zu verdrängen. Eine weitere umlaufende Profilierung 6 ist in Gleitrichtung hinter der ersten Profilierung 6 angeordnet. Durch die Anordnung dieser Profilierungen 6 ist eine gezielte Umformung des Gegenlagers 3 durch die Gleiteinheit 2 beim Entlanggleiten entlang des Gleitweges a möglich. Der hierfür erforderliche Verschiebewiderstand zwischen der Gleiteinheit 2 und dem Gegenlager 3 ist definiert vorgebbar. Im hier gezeigten Ausführungsbeispiel ist die Gleiteinheit 2 als rohrförmiger Kolben ausgebildet, der in Umfangsrichtung eine Profilierung 6 aufweist. In Gleitrichtung 9 vor der Profilierung 6 hat der Kolben 2 einen kleineren Außendurchmesser als der Innendurchmesser des als rohrförmige Hülse ausgebildeten Gegenlagers 3. Eine weitere umlaufende Profilierung 6 ist in Gleitrichtung 9 hinter der ersten Profilierung 6 angeordnet. Entgegen der Gleitrichtung 9, hinter den Profilierungen 6 weist der Kolben einen größeren Außendurchmesser als der Innendurchmesser des hülsenförmigen Gegenlagers 3 auf. Hierdurch kann eine gezielte Verformung des Gegenlagers 3 durch die Gleiteinheit 2 erreicht werden. Wie in Figur 3 zu sehen ist, drückt der Kolben 2 beim Entlanggleiten auf dem Gleitweg a in Richtung Gleitrichtung 9 die Hülse des Gegenlagers 3 nach außen auf und sorgt hierdurch für einen definiert vorgebbaren Verschiebewiderstand zwischen dem Gegenlager 3 und der Gleiteinheit 2. Die durch die engere Hülse 3 auf den Kolben 2 ausgeübte Kraft F dient ebenfalls der genauen Vorgabe des Verschiebewiderstand des entlang des Gleitweges a. Zur Herstellung des gezeigten Widerstandsgleitlagers 1 wird die Gleiteinheit 2 in Gleitrichtung 9 in das Gegenlager 3 eingepresst. Hierbei wird ein Kraft-Weg-Diagramm aufgezeichnet, welches den Verschiebewiderstand dokumentiert.

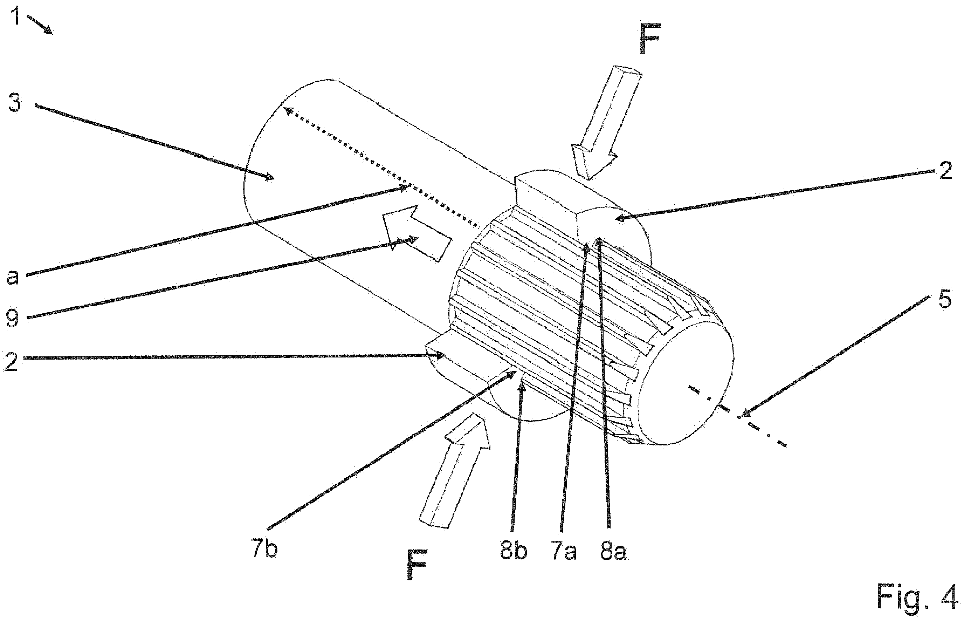

Die Figur 4 zeigt weiteres axiales Widerstandsgleitlager 1. Das Gegenlager 3 ist hier als Kolben und die Gleiteinheit 2 als das Gegenlager 3 umgebende Hülse ausgebildet. Zum Zwecke der Erläuterung ist die Hülse der Gleiteinheit 2 aufgeschnitten dargestellt. Durch das Gegenlager 3 und die Gleiteinheit 2 ist die Lagerachse 5 des Widerstandsgleitlagers 1 gebildet, welche die Richtung des Gleitwegs a vorgibt. Bei Überwindung des Verschiebewiderstands zwischen der Gleiteinheit 2 und dem Gegenlager 3 gleitet die Gleiteinheit 2 entlang des Gleitweges a in Gleitrichtung 9 am Gegenlager 3 entlang. Hierdurch können zwei nicht gezeigte Bauteile, die zum einen mit der Gleiteinheit 2 und zum anderen mit dem Gegenlager 3 verbunden sind durch das Widerstandsgleitlager 1 definiert zueinander gelagert werden. Deshalb lassen sich durch das Widerstandsgleitlager 1 einfach Überlastsituationen zwischen den gelagerten Bauteilen abfangen, sodass eine Zerstörung der Bauteile, oder zu mindestens eines Bauteils, durch das Widerstandsgleitlager 1 wirksam verhindert werden kann. Bei den mit dem Widerstandsgleitlager 1 gelagerten Bauteilen kann es sich beispielsweise um einen Brückenpfeiler handeln, der mit der Gleiteinheit 2 verbunden ist und ein Tragseil, dass mit dem Gegenlager 3 verbunden ist. In einer Überlastsituation durch erhöhte Zugkräfte an dem Tragseil wird der definierte Verschiebewiderstand im Widerstandsgleitlager 1 überwunden, sodass die Gleiteinheit 2 entlang des Gleitweges a am Gegenlager 3 entlang gleitet. Hierdurch wird das Tragseil entlastet und ein Reißen des Tragseils verhindert. Um die beispielhaft dargestellte Überlastsituation gezielt abfangen zu können ist ein definierter Verschiebewiderstand zwischen der Gleiteinheit 2 und dem Gegenlager 3 entscheidend. Der Verschiebewiderstand kann hierfür im Wesentlichen durch den Haftreibungswiderstand und den Gleitreibungswiderstand zwischen der Gleiteinheit 2 und dem Gegenlager 3 gegeben sein. Bei einem Haftreibungswiderstand, der im Wesentlichen dem Gleitreibungswiderstand zwischen der Gleiteinheit 2 und dem Gegenlager 3 entspricht, kann ein möglichst gleichbleibender Verschiebewiderstand über den gesamten Gleitweg a des axialen Widerstandsgleitlagers 1 erreicht werden. Auch durch eine gezielte Umformung des Gegenlagers 3 durch die Gleiteinheit 2 beim Entlanggleiten der Gleiteinheit 2 auf dem Gleitweg a an dem Gegenlager 3 kann ein definierter Verschiebewiderstand zwischen Gleiteinheit 2 und Gegenlager 3 vorgegeben werden. Die in Figur 4 gezeigte Gleiteinheit 2 weist hierzu eine Profilierung 6 auf, die durch Zähne 7a, 7b und Zahntäler 8a, 8b gebildet ist. Die Zähne 7a, 7b der Profilierung 6 stehen von der Körperkontur der Gleiteinheit 2, also dem Innendurchmesser der Hülse, ab und bilden zwischen den Zähnen 7a, 7b jeweils Zahntäler 8a, 8b aus. Bei der Entlastungsbewegung im Widerstandsgleitlager 1, also der Bewegung der Gleiteinheit 2 in Gleitrichtung 9 im Gegenlager 3 wird eine definierte Umformung des Gegenlagers 3 durch die Gleiteinheit 2 erreicht. Die Zähne 7a, 7b der Gleiteinheit 2 schneiden nicht in das Gegenlager 3 sondern verdrängen das Material des Gegenlagers 3 lediglich, wie in Figur 3 an der Riffelung, in Gleitrichtung 9 hinter der Gleiteinheit 2, zu sehen. Es kommt bei der Bewegung der Gleiteinheit 2 am Gegenlager 3 zu keiner Spanbildung an den Zähnen 7a, 7b, da dies die definierte Vorgabe des Verschiebewiderstands erschweren würde. Hierzu sind die Zähne 7a, 7b im vorderen, hier nicht zu sehenden Bereich abgeflacht. Das durch die Zähne 7a, 7b verdrängte Material wird in die Zahntäler 8a, 8b der Gleiteinheit 2 verdrängt, sodass eine definierte Umformung gegeben ist, die einen genau vorgebbaren Verschiebewiderstand bestimmt. Die Zähne 7a, 7b dienen zudem der Zentrierung der Gleiteinheit 2 auf dem Gegenlager 3 und der Führung der Gleiteinheit 2 entlang des Gleitweges a am Gegenlager 3. Im hier gezeigten Ausführungsbeispiel verlaufen die Zähne 7a, 7b und Zahntäler 8a, 8b in Richtung der Lagerachse 5. Es ist aber auch denkbar, dass die Zähne 7a, 7b einen Drall um die Lagerachse 5 aufweisen und so beim Entlanggleiten ein Gewinde am Gegenlager 3 ausbilden. Dies kann bei der Lagerung von gedrehten Drahtseilen durch das Widerstandsgleitlager 1 von Vorteil sein, da das Gewinde die durch das belastete Drahtseil induzierte Drehbewegung um die Lagerachse 5 neutralisieren kann, um den Verschiebewiderstand nicht durch zusätzliche Reibung undefiniert zu verstärken. Zur Herstellung des gezeigten Widerstandsgleitlagers 1 wird die Gleiteinheit 2 in Gleitrichtung 9 auf das Gegenlager 3 gepresst. Hierbei wird ein Kraft-Weg-Diagramm aufgezeichnet, welches Aufschlüsse über den Verschiebewiderstand auf dem verbleibenden Gleitweg a gibt.

Für die definierte Vorgabe des Verschiebewiderstands ist die Materialwahl für die Gleiteinheit 2 und das Gegenlager 3, neben der jeweiligen Form, von entscheidender Bedeutung. Für die Gleiteinheit 2 eignet sich aufgrund der hervorragenden Härte besonders Nitrierstahl, wie etwa 34CrAINi7-10 mit einer definierten Gasnitriertiefe zwischen 0,1 und 1 mm und einer Rockwellhärte von HRC 66. Hier von besonderem Vorteil ist auch korrosionsbeständiger und nitrierbarer und hochtemperaturbeständiger Stahl. Durch die Verwendung von korrosionsbeständigen Stahl kann ein gleichbleibender Verschiebewiederstand zwischen der Gleiteinheit und dem Gegenlager auch über einen längeren Zeitraum und in korrosiver Umgebung sichergestellt werden. Auch besonders geeignet für die Gleiteinheit 2 ist austenitischer und / oder martensitischer Stahl. Zum Beispiel können Stähle mit den EN-Nummern 1.4028, 1.4104, 1.4112, 1.4117, 1.4301, 1.4305, 1.4401, 1.4535 für die Gleiteinheit verwendet werden. Diese eignen sich besonders in korrosionsaggressiver Umgebung, da sie auch dort einen definierten Verschiebewiderstand sicherstellen. Bei nichtkorrosionsaggressiver Umgebung werden für die Gleiteinheit auch Baustähle, Kohlenstoffstähle Automatenstähle, Einsatzstähle, Vergütungsstähle und Grauguss verwendet, wie zum Beispiel die Materialeine mit der EN-Nummern-Bezeichnung 1.0116, 1.0503, 1.0711, m1.7131, 1.7225, 1.2344, Für das Gegenlager 3 ist insbesondere die mechanische Eigenschaft zu fließen von entscheidender Bedeutung, bei Überwindung des Verschiebewiederstands wird das Material des Gegenlagers 3 in die freien Profilholräume der Gleiteinheit 2 verdrängt. Hierfür eignet sich Baustahl, Werkzeugstahl, Automatenstahl, wie z. B C45 EN 10083-2, Sintereinsen, Kupfer-Gusseisen, Blei-Zinn-Gusslegierungen oder auch Sintermetall. Weiterhin können für das Gegenlager auch Kupferlegierungen verwendet werden. Besonders geeignet sind hier CuSn11Pb2-C oder Familie, CuSn5Zn4Pb9-C oder Familie, CuSN7Pb15-C oder Familie, CuSn8 (Caro Bronze) Nr. 2.1030, CuAl10Ni5Fe4 oder Familie Nr. 2.0966. Bei dem Sintereinsen eignet sich besonders das Material mit der Artikel Nr.: CA-43337 (53x85x120) der Firma Caspar Gleitlager GmbH. Auch kann das Gegenlager 3 aus einer Kupferknetlegierung, einer Blei-Zinn-Gusslegierung, einem thermoplastischen Kunststoff oder einem Duroplast bestehen.

Die Werkstoffkombinationen zwischen Gleiteinheit 2 und Gegenlager 3 ergeben sich jeweils spezifisch für die Art der individuellen physikalischen Projektanforderungen. Da die Verschiebewiderstände dem jeweiligen Projekt und Einsatzzweck angepasst werden können, werden hier Durchmesserpaarungen, aber auch Werkstoffkombinationen mit unterschiedlichen Eigenschaften, wie Rauheit, Einführungswinkel, oder Profilgeometrie genutzt. Die Oberflächen der Gleiteinheit 2 und des Gegenlagers 3 können zudem behandelt sein. Außerdem kann an der Gleiteinheit 2 und an dem Gegenlager 3 eine Vergütung vorgenommen sein. Auch können mit Fett oder Molykote Schmiersstoffe verwendet werden, um einen definierten Verschiebewiederstand zwischen Gleiteinheit 2 und Gegenlager 3 vorzugeben.

Als besonders geeignete Materialkombination zur Vorgabe eines definierten Verschiebwiederstand im erfindungsgemäßen Widerstandgleitlager hat sich Nitrierstahl 34CrAlNi7-10+QT+SR (1.8550) mit 0,5 mm Nietriertiefe für die Gleiteinheit und Sinterbronze ölgetränkt (Sint-A50) für das Gegenlager herausgestellt. Sinterbronze ist aufgrund der Korrosionseigenschaften besonders geeignet.

### Bezuaszeichenliste

- 1: Widerstandsgleitlager
- 2: Gleiteinheit
- 3: Gegenlager
- 4: Kontaktstelle
- 5: Lagerachse
- 6: Profilierung
- 7a, 7b, 7c: Zähne
- 8a, 8b, 8c: Zahntäler
- 9: Gleitrichtung
- a: Gleitweg

## Patentansprüche

1. Axiales Widerstandsgleitlager (1) mit
- einer Gleiteinheit (2),
- einem Gegenlager (3), wobei die Gleiteinheit (2) das Gegenlager (3) an mindestens einer Kontaktstelle (4) berührt,
- einer Lagerachse (5), wobei die Lagerachse (5) die Richtung eines Gleitweges (a) vorgibt, wobei die Gleiteinheit (2) bei Überwindung eines Verschiebewiderstands zwischen der Gleiteinheit (2) und dem Gegenlager (3) entlang des Gleitwegs (a) am Gegenlager (3) entlang gleitet,
**dadurch gekennzeichnet, dass** der Verschiebwiederstand definiert vorgebbar ist.

2. Axiales Widerstandsgleitlager (1) nach Anspruch 1, **dadurch gekennzeichnet, dass** der Verschiebewiderstand im Wesentlichen durch den Haftreibungswiderstand und den Gleitreibungswiderstand zwischen der Gleiteinheit (2) und dem Gegenlager (3) gegeben ist.

3. Axiales Widerstandsgleitlager (1) nach Anspruch 2, **dadurch gekennzeichnet, dass** der Haftreibungswiderstand dem Gleitreibungswiderstand zwischen der Gleiteinheit (2) und dem Gegenlager (3) nahekommt, sodass ein möglichst gleichbleibender Verschiebewiderstand gegeben ist.

4. Axiales Widerstandsgleitlager (1) nach einem der Ansprüche 1 bis 3, **dadurch gekennzeichnet, dass** der Verschiebewiderstand durch die Umformung des Gegenlagers (3) durch die Gleiteinheit (2) beim Entlangleiten der Gleiteinheit (2) auf dem Gleitweg (a) an dem Gegenlager (3) gegeben ist.

5. Axiales Widerstandsgleitlager (1) nach Anspruch 4, **dadurch gekennzeichnet, dass** die Gleiteinheit (2) dazu ausgebildet ist, beim Entlanggleiten auf dem Gleitweg (a) das Material des Gegenlagers (3) zu verdrängen.

6. Axiales Widerstandsgleitlager (1) nach einem der Ansprüche 1 bis 5, **dadurch gekennzeichnet, dass** die Gleiteinheit (2) aus Nitrierstahl, vorzugsweise aus korrosionsbeständigem und nitrierbarem und hochtemperaturbeständigem Stahl, weiter vorzugsweise aus austenitischem und / oder martensitischem Stahl, besteht.

7. Axiales Widerstandsgleitlager (1) nach einem der Ansprüche 1 bis 6, **dadurch gekennzeichnet, dass** das Gegenlager (3) aus Baustahl, Werkzeugstahl, Automatenstahl, Sintereinsen, Kupfer-Gusseisen, Sintermetall, einer Kupferlegierung, einer Kupferknetlegierung, einer Blei-Zinn-Gusslegierung, einem thermoplastischen Kunststoff oder einem Duroplast besteht.

8. Axiales Widerstandsgleitlager (1) nach einem der Ansprüche 1 bis 7, **dadurch gekennzeichnet, dass** die Gleiteinheit (2) als Kolben ausgebildet ist und das Gegenlager (3) als eine die Gleiteinheit (2) umgebende Hülse ausgebildet ist.

9. Axiales Widerstandsgleitlager (1) nach einem der Ansprüche 1 bis 7, **dadurch gekennzeichnet, dass** das Gegenlager (3) als Kolben ausgebildet ist und die Gleiteinheit (2) als das Gegenlager (3) umgebende Hülse ausgebildet ist.

10. Axiales Widerstandsgleitlager (1) nach Anspruch 8 oder 9, **dadurch gekennzeichnet, dass** die Gleiteinheit (2) eine Profilierung (6) aufweist, die dazu ausgebildet ist, in das Material des Gegenlagers (3) einzudringen.

11. Axiales Widerstandsgleitlager (1) nach Anspruch 10, **dadurch gekennzeichnet, dass** die Profilierung (6) als Zähne (7a, 7b, 7c) ausgebildet ist, die von der Körperkontur der Gleiteinheit (2) abstehen und zwischen den Zähnen (7a, 7b, 7c) jeweils Zahntäler (8a, 8b, 8c) ausbilden.

12. Axiales Widerstandsgleitlager (1) nach einem der Ansprüche 8 bis 11, **dadurch gekennzeichnet, dass** der Kolben in Richtung der Lagerachse (5) einen konischen Verlauf aufweist, wobei der Kolben in Gleitrichtung (9) einen kleineren Außendurchmesser aufweist als der Innendurchmesser der Hülse und der Kolben entgegen der Gleitrichtung (9) einen größeren Außendurchmesser aufweist als der Innendurchmesser der Hülse.

13. Axiales Widerstandsgleitlager (1) nach einem der Ansprüche 1 bis 12, **dadurch gekennzeichnet, dass** die Position der Gleiteinheit (2) relativ zum Gegenlager (3) sensorisch erfasst wird.

14. Verfahren zur Herstellung eines axialen Widerstandsgleitlagers (1) umfassend folgende Schritte:
- Bereitstellung einer Gleiteinheit (2),
- Bereitstellung eines Gegenlagers (3),
- Zusammenfügen von Gleiteinheit (2) und Gegenlager (3) durch Ineinanderpressen der Teile auf einer Presse,
**dadurch gekennzeichnet, dass** beim Zusammenfügen der Gleiteinheit (2) und des Gegenlagers (3) ein Kraft-Weg-Diagramm aufgezeichnet wird.
